# EUROPÄISCHE PATENTANMELDUNG

(11) **EP 3 646 977 A1**
(43) Veröffentlichungstag der Anmeldung: **06.05.2020**
(21) Anmeldenummer: 19204475.8
(22) Anmeldetag: 22.10.2019
(51) Int. Cl.: B23G 7/02

(54) **GEWINDEFORMER MIT BÖRDELSTEGEN**

(30) Priorität: 29.10.2018 DE 102018126927
(71) Anmelder: EMUGE-Werk Richard Glimpel GmbH & Co.KG Fabrik für Präzisionswerkzeuge, 91207 Lauf a.d. Pegnitz (DE)
(72) Erfinder: Glimpel, Helmut, 91207 Lauf (DE); Fenzel, Jürgen, 91245 Simmelsdorf (DE)
(74) Vertreter: Schröer, Gernot H.

(57) **Zusammenfassung**

Die Erfindung betrifft ein Werkzeug (1) zur spanlosen Erzeugung oder Nachbearbeitung eines Gewindes in oder an einem Werkstück, insbesondere Gewindefurcher oder Gewindeformer, umfassend mindestens einen um eine Werkzeugachse (A) drehbaren oder drehenden Formungsbereich (5) zur spanlosen Erzeugung oder Nachbearbeitung des Gewindes,wobei der Formungsbereich (5) mehrere radial von der Werkzeugachse (A) weg nach außen ragende oder vorstehende Drückstollen (7, 7a, 7b, 7c) aufweist zum Erzeugen oder Nachbearbeiten des Gewindes durch Eindrücken der Drückstollen (7, 7a, 7b, 7c) in die Werkstückoberfläche, wobei die Drückstollen (7, 7a, 7b, 7c) entlang einer die Werkzeugachse (A) im Wesentlichen spiralförmig umlaufenden Formgebungskurve (6) aufeinanderfolgend angeordnet sind, und wobei die Steigung der Formgebungskurve (6) im Wesentlichen der Steigung des zu erzeugenden oder nachzuarbeitenden Gewindes entspricht, wobei die Drückstollen zumindest einen Drücksteg (9) bilden, und wobei benachbart zu dem zumindest einen Drücksteg (9) ein Bördelsteg (10) mit einer geringeren Höhe H_{B} als der Höhe des Drückstegs H_{D} ausgebildet ist.

Weiterhin betrifft die Erfindung ein Verfahren zum Erzeugen eines Gewindes.

## Beschreibung

Die Erfindung betrifft ein Werkzeug zur spanlosen Erzeugung oder Nachbearbeitung eines Gewindes an einem Werkstück, insbesondere einen Gewindefurcher oder Gewindeformer. Weiterhin betrifft die Erfindung ein Verfahren zum Erzeugen eines Gewindes.

Bei diesen Werkzeugen erfolgt die Gewindeerzeugung spanlos mittels Umformung des Werkstücks, indem sogenannte Drückstollen, auch als Formkeile oder Zähne bezeichnet, durch Druck eine Kaltverformung des Werkstücks bewirken. Ein solcher Drückstollen weist Flanken auf. Der Vorteil dieser Werkzeuge ist, dass durch die Verformung der Oberfläche und die damit verbundene Verfestigung die Härte des Werkstoffs im Bereich des Gewindeprofils ansteigt und somit ein verschleißfesteres Gewinde als bei spanender Gewindeerzeugung entsteht.

Bekannte Gewindefurcher, insbesondere zur Innengewindeerzeugung, umfassen einen Schaft und einen Arbeitsbereich. Der Schaft ist in der Regel zylindrisch ausgeführt und mit seinem dem Werkstück abgewandten Ende im Spannfutter einer Gewindeerzeugungseinrichtung aufgenommen und gehalten. Der Arbeitsbereich, insbesondere der Formungsbereich, befindet sich auf der dem Schaft gegenüberliegenden Seite des Gewindefurchers.

Der Formungsbereich ist mit einer entlang des Umfangs spiralförmig umlaufenden Formgebungskurve versehen, entlang der als Erhöhungen die Drückstollen ausgebildet sind.

Bei bekannten Gewindefurchern ist der Teilungswinkel zwischen zwei jeweils entlang der Formgebungskurve aufeinanderfolgenden Drückstollen für alle Drückstollen gleich groß. Eine gedachte geradlinige Verbindungslinie zwischen den Spitzen der Drückstollen entlang der Formgebungskurve bildet in einer Projektion auf eine Fläche senkrecht zur Werkzeugachse bis auf radiale Abweichungen im Wesentlichen ein regelmäßiges n-Eck, wobei n Drückstollen pro Umlauf der Formgebungskurve um die Werkzeugachse angeordnet sind. Jeder n-te Drückstollen ist entlang einer Geraden parallel zur Werkzeugachse angeordnet, diese entlang einer Geraden angeordneten Drückstollen bilden einen sogenannten Drücksteg. Weiterhin bekannt sind Gewindefurcher mit jeweils unterschiedlichen Teilungswinkeln. Ein solcher Gewindefurcher oder Gewindeformer ist aus der DE 10 2012 100 734 A1 bekannt.

Bei den bekannten Gewindeformern besteht das Problem, dass beim Erzeugen insbesondere eines Innengewindes zwischen den Gewindegängen eine sogenannte Ausformkralle entsteht.

In der DE 10 2016 009 738 A1 wird ein Gewindeformverfahren offenbart, in dem zunächst in einem ersten Schritt ein Gewinde erzeugt wird, welches zwischen den Gewindegängen eine sogenannte Ausformkralle aufweist und anschließend in einem zweiten Prozessschritt der Bereich der Ausformkralle zwischen den Gewinden ausgeschnitten wird. Nachteilig an dem bekannten Verfahren ist, dass im Schnittbereich Grate und/oder Verformungen des Gewindes entstehen können. Der Gefügeverlauf kann beim Gewindeschneiden unterbrochen bzw. angeschnitten werden und es findet keine Gefügeverfestigung über den gesamten Bereich des Muttergewindeprofils, d.h. Innengewindeprofils, statt. Weiterhin können durch das Ausschneiden Späne in der Gewindebohrung auftreten. Zudem ist das Ausschneiden zum Teil ein unerlaubter Bearbeitungsprozess bei vorgeschriebenen Gewindeformen.

Der vorliegenden Erfindung liegt die Aufgabe zugrunde, ein neuartiges Werkzeug zur spanlosen Erzeugung eines Gewindes, insbesondere einen neuartigen Gewindefurcher oder Gewindeformer, anzugeben, welcher eine spanlose Beseitigung einer Ausformkralle ermöglicht. Weiterhin soll ein Verfahren zum Erzeugen eines Gewindes angegeben werden.

Diese Aufgabe wird gelöst durch die Merkmale des Anspruchs 1 hinsichtlich des Werkzeuges und durch die Merkmale des Anspruchs 9 hinsichtlich des Verfahrens. Vorteilhafte Ausgestaltungen und Weiterbildungen sind in den abhängigen Ansprüchen angegeben.

Das Werkzeug gemäß der Erfindung umfasst mindestens einen um eine Werkzeugachse drehbaren oder drehenden Formungsbereich zur spanlosen Erzeugung oder Nachbearbeitung des Gewindes, insbesondere eines Innengewindes. Der Formungsbereich weist mehrere radial von der Werkzeugachse weg nach außen ragende oder vorstehende Drückstollen zum Erzeugen oder Nachbearbeiten des Gewindes durch Eindrücken der Drückstollen in die Werkstückoberfläche auf. Die Drückstollen sind entlang einer die Werkzeugachse im Wesentlichen spiralförmig (oder schraubenförmig oder helixförmig) umlaufenden Formgebungskurve aufeinanderfolgend angeordnet. Die Steigung der Formgebungskurve entspricht im Wesentlichen der Steigung des zu erzeugenden oder nachzuarbeitenden Gewindes.

Erfindungsgemäß bilden die Drückstollen zumindest einen Drücksteg. Ein solcher Drücksteg wird im Sinne dieser Erfindung durch eine Mehrzahl von Drückstollen gebildet. Dabei kann es sich um einen geraden Drückstollen handeln, in dem jeder n-te Drückstollen entlang einer Geraden parallel zur Werkzeugachse angeordnet ist, d.h. in einem Winkel von 360°. Alternativ kann es sich auch um einen helixförmigen Drücksteg handeln, in dem jeder n-te Drückstollen in einem Winkel von 360° + Δα angeordnet ist, wobei Δα der Verschiebungswinkel ist.

Weiter erfindungsgemäß ist benachbart zu dem zumindest einen Drücksteg ein Bördelsteg mit einer geringeren Höhe H_{B} als der Höhe des Drückstegs H_{D} ausgebildet. Die Höhe H_{D} des Drücksteges ist dabei als radialer Abstand zwischen dem Radius einer Spitze des Drückstollens und der Werkzeugachse definiert. Die Höhe H_{B} des Bördelstegs wird definiert über dessen radialen Abstand zur Werkzeugachse. So ist dies insbesondere der halbe Durchmesser des nach dem Gewindeumformprozess erzeugten gewünschten Innengewindekerndurchmessers. Sowohl die Höhe des Drückstegs H_{D} als auch die Höhe des Bördelstegs H_{B} sind größer als ein halber Kerndurchmesser H_{K} des Werkzeugs. Dieser entspricht zweckmäßigerweise dem radialen Abstand zwischen zwei benachbarten Drückstegen. Bördelsteg und Drücksteg verlaufen zweckmäßigerweise parallel zueinander. Wenn also der Drücksteg helixförmig ausgestaltet ist, ist ein dazu paralleler Bördelsteg auch helixförmig mit einer gleichen Spiralsteigung ausgestaltet. Der Bördelsteg weist insbesondere entlang seiner Erstreckungsrichtung ein im Wesentlichen gleichförmiges Profil auf. Dieses Profil kann z.B. Sinusförmig oder Parabelförmig ausgebildet sein. Dabei hat der Bördelsteg zweckmäßigerweise die gleiche Länge entlang der Werkzeugachse wie ein Drücksteg.

In einer alternativen Ausgestaltung ist der Bördelsteg aus zwei oder mehreren Teilbördelstegen gebildet. Wenn der Bördelsteg aus Teilbördelstegen gebildet ist, muss jeder der Teilbördelstege so auf der Formgebungskurve nach einem bzw. zwischen zwei Drückstollen angeordnet sein, dass er die durch den vorhergehenden Drückstollen erzeugte Ausformkralle zumindest teilweise verformt. Dazu muss jeder der Teilbördelstege zweckmäßigerweise entlang der Werkzeugachse eine größere Länge aufweisen als der auf der Formgebungskurve vorhergehende Drückstollen.

Die Vorteile des erfindungsgemäßen Werkzeugs liegen darin, dass der Bördelsteg bei jeder Umdrehung die Gewindegänge überstreicht und dabei eine sich ausbildende Ausformkralle zwischen den Gewindegängen im Bereich des Innengewindekerndurchmessers eindrückt.

In einer Ausgestaltung sind die Drückstollen in zumindest zwei Drückstegen angeordnet und das Werkzeug weist zumindest zwei Bördelstege auf, welche jeweils zwischen zwei Drückstegen angeordnet sind.

In einer weiteren Ausgestaltung weist der Bördelsteg eine Höhe H_{B} auf, die zwischen einem halben Kerndurchmesser H_{K} des Werkzeugs und der Höhe H_{D} liegt. Insbesondere weist der Bördelsteg eine Höhe H_{B} auf, sodass der Bördelsteg eine Ausformkralle zumindest teilweise eindrückt. Eine solche Höhe H_{B} hat sich als besonders vorteilhaft zur effektiven Vermeidung von Ausformkrallen herausgestellt.

Das Vermindern der Ausformkralle bzw. dessen komplette Reduktion wird beeinflusst durch eine Änderung eines Gewindevorfertigungsdurchmessers, z.B. Vorbohrdurchmessers. Wird der Gewindevorfertigungsdurchmesser kleiner gewählt, ist mehr umzuformendes Material zwischen den Gewindeflanken des Werkzeugs vorhanden und wird somit Richtung Werkzeugachse verdrängt. Nun kann mehr Material mittels des Bördelsteg verformt werden und die Ausformkralle schließt sich ggf. vollständig.

Gemäß einer Variante erstreckt sich der zumindest eine Drücksteg und der zumindest eine Bördelsteg parallel zur Werkzeugachse. Drücksteg und Bördelsteg erstrecken sich somit als Gerade.

Gemäß einer weiteren Variante sind die zumindest zwei Bördelstege symmetrisch in Bezug auf die Werkzeugachse A angeordnet. Somit wären, bei einem Werkzeug mit zwei Bördelstegen, die Bördelstege mit einem Winkel von 180° angeordnet, bei drei Bördelstegen mit einem Winkel von 120° zwischen den Bördelstegen angeordnet.

In einer Ausgestaltung sind mehrere Drückstege zwischen zwei Bördelstegen angeordnet. So können zum Beispiel auch zwei, drei, vier oder mehr Drückstege zwischen zwei Bördelstegen angeordnet sein.

In einer weiteren Variante ist ein Teilungswinkel zwischen einem Drücksteg und/oder Bördelsteg und dem in Umfangsrichtung nachfolgenden Drücksteg und/oder Bördelsteg im Wesentlichen gleich. In anderen Worten ist der Teilungswinkel zwischen zwei in Umfangsrichtung aufeinanderfolgenden Stegen gleich, unabhängig davon, ob es sich um einen Drücksteg oder einen Bördelsteg handelt.

In einer weiteren Variante ist ein Teilungswinkel zwischen einem Drücksteg und/oder Bördelsteg und dem in Umfangsrichtung nachfolgenden Drücksteg und/oder Bördelsteg im Wesentlichen ungleich.

In einer weiteren Variante kann der Kerndurchmesser des Werkzeugs soweit erhöht werden, dass dieser den gewünschten Innengewindekerndurchmesser erzeugt.

Bei einer weiteren Variante können ein oder mehrere Drückstollen in einem oder mehreren Drückstegen verkleinert oder entfernt sein, um ein Klemmen des Materials zu verhindern. Z.B. kann von einer Werkzeugspitze aus gesehen der dritte Drückstollen in einem Drücksteg und der fünfte Drückstollen in einem zweiten Drückstollen eine reduzierte Höhe aufweisen oder fehlen.

Das erfindungsgemäße Verfahren zum Herstellen eines Innengewindes umfasst die folgenden sich iterativ wiederholenden Schritte:
- Eindrücken eines Gewindes mittels eines oder mehrerer Drückstollen mit einem rotierenden Werkzeug und
- Nachfolgendes Umformen des Gewindezwischenraumes mit einem Bördelsteg.

Das Verfahren kann insbesondere mit dem erfindungsgemäßen Werkzeug durchgeführt werden.

Zweckmäßigerweise wird vor dem Eindrücken des Gewindes eine Vorbohrung mit einem Gewindevorfertigungsdurchmesser hergestellt.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Dabei zeigen
Fig. 1 eine perspektivische Ansicht eines Ausführungsbeispiels eines erfindungsgemäßen Gewindefurchers,
Fig. 2 eine weitere Ansicht des Ausführungsbeispiels aus Fig. 1 des Gewindefurchers und
Fig. 3 eine Projektion des Ausführungsbeispiels aus Fig. 1 eines erfindungsgemäßen Werkzeugs in eine Ebene senkrecht zur Werkzeugachse, in Blickrichtung entgegen einer Vorschubrichtung des Werkzeugs.

Einander entsprechende Teile und Größen sind in den Figuren mit den gleichen Bezugszeichen bezeichnet.

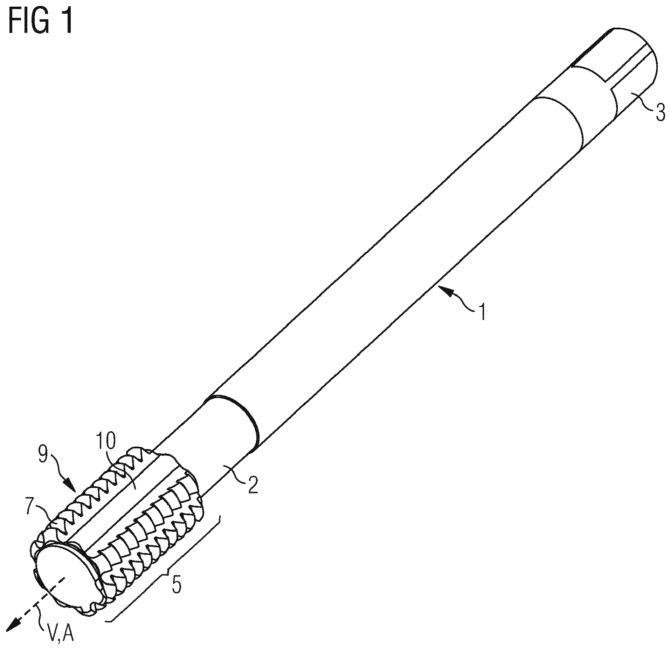

Fig. 1 zeigt einen erfindungsgemäßen Gewindefurcher 1, der einen Werkzeugschaft 2 und einen Arbeitsbereich, den Formungsbereich 5, umfasst. Eine Werkzeugachse A, die gleichzeitig eine Drehachse des Gewindefurchers 1 darstellt, verläuft parallel zur Längserstreckung des Gewindefurchers 1 durch die Mitte des Gewindefurchers 1. Eine Vorschubrichtung V des Gewindefurchers 1 verläuft parallel zur Werkzeugachse A und ist in Fig. 1 durch die Pfeilrichtung angegeben. Der Gewindefurcher 1 dient zur spanlosen Innengewindeherstellung.

Der Werkzeugschaft 2 kann beispielsweise zylindrisch ausgeführt sein und trägt in der Regel an der im Spannfutter eingebrachten Seite einen Vierkant 3 zur Furchmomentübertragung. Der Werkzeugschaft 2 ist hier fest mit dem angrenzenden Formungsbereich 5 verbunden, insbesondere sind der Werkzeugschaft 2 und der Formungsbereich 5 einstückig ausgeführt.

Im Formungsbereich 5 sind an einem Werkzeugkern als Formgebungsgewinde zahlreiche Drückstollen 7 entlang einer Formgebungskurve 6 ausgebildet. Die Formgebungskurve 6 läuft spiralförmig bzw. schraubenförmig, d.h. mit Steigung, um die Werkzeugachse A. Die Drückstollen 7 weisen an ihrem freien äußeren Ende jeweils eine Spitze 8 (auch: Kopf) auf. Die Drückstollen 7 sind entlang der Formgebungskurve 6 und damit aufgrund der Steigung der Formgebungskurve 6 axial entlang der Werkzeugachse A versetzt angeordnet.

In der gezeigten Ausführungsform sind die Drückstollen 7 in sechs Drückstegen 9 angeordnet. Das heißt entlang eines Umlaufes entlang der Formgebungskurve 6 sind sechs Drückstollen angeordnet. Die Drückstege 9 sind parallel zur Werkzeugachse A angeordnet. In Fig. 1 sind weiterhin zwei Bördelstege 10 sichtbar, welche auf gegenüberliegenden Seiten des Schaftes ebenfalls parallel zur Werkzeugachse A angeordnet sind.

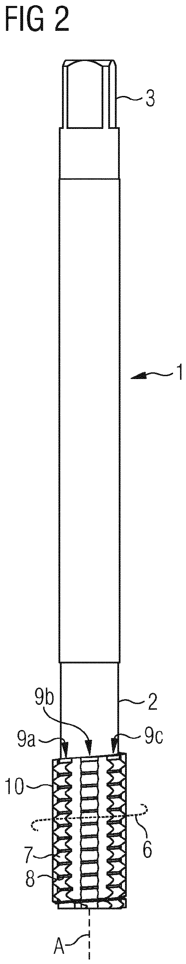

Fig. 2 zeigt eine Projektion der in Fig. 1 gezeigten Ausführungsform. Die Drückstege 9a, 9b, 9c sind nebeneinander angeordnet. Die Bördelstege 10 sind jeweils neben dem Drücksteg 9a und neben dem Drücksteg 9c in der gezeigten Projektion am oberen und unteren Rand des gezeigten Gewindefurchers 1 dargestellt.

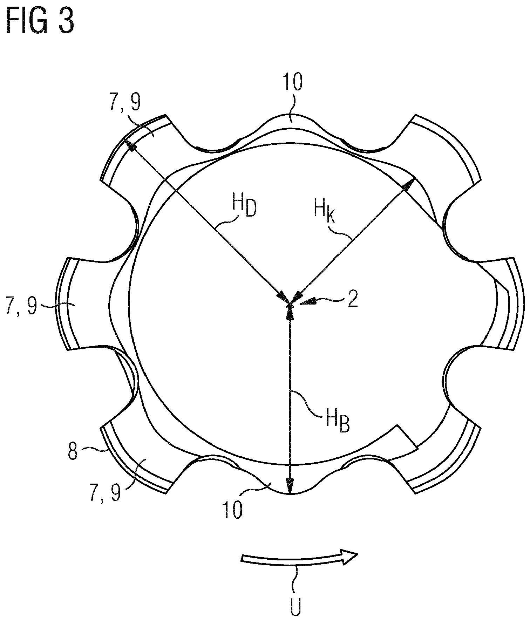

Fig. 3 zeigt eine Projektion des Ausführungsbeispiels eines erfindungsgemäßen Werkzeugs in eine Ebene senkrecht zur Werkzeugachse, in Blickrichtung entgegen einer Vorschubrichtung des Werkzeugs. In der Projektion sind jeweils drei Drückstollen 7 nebeneinander angeordnet. Die Drückstollen 7 sind in Drückstegen 9 angeordnet. Zwischen den Gruppen von jeweils drei Drückstollen 7 sind die Bördelstege 10 angeordnet. Die Bördelstege 10 weisen eine Höhe H_{B} auf, welche geringer ist als die Höhe H_{D} der Drückstege 9 aber größer als ein halber Kerndurchmesser H_{K} des Werkzeugs. Bei einem Umlauf des Gewindefurchers wird mit den Drückstollen zunächst ein Gewinde gedrückt. Der in Umlaufrichtung U nachfolgende Bördelsteg 10 weist eine solche Höhe auf, dass er nicht den bereits geformten Gewindegang, aber den zwischen den Gewindegängen stehenden Bereich erfasst. Dabei wird zwischen den Gewindegängen befindliches Material radial nach außen und ggf. teilweise in die Gewindegänge gedrückt, so dass die Entstehung von zwischen den Gewindegängen befindlichen Ausformkrallen rückgängig gemacht wird. Weiter im Umlauf wird mit den drei darauffolgenden Drückstollen 7 wieder der Gewindegang weiter ausgeformt. Mit dem nachfolgenden Bördelsteg 10 wird wiederum der Bereich zwischen den Gewindegängen kontaktiert. Durch die iterative Bearbeitung der Gewindegänge und des Bereichs zwischen den Gewindegängen kann ein Gewinde hergestellt werden, bei welchem keine Nachbearbeitung durch nachfolgendes Ausschneiden oder Bohren eines inneren Bereichs zum Entfernen von Ausformkrallen notwendig ist. In Ausgestaltung können einzelne Drückstollen fehlen oder eine geringere Größe aufweisen, um ein Verklemmen zu verhindern.

### Bezugszeichenliste

- 1: Werkzeug zur Materialbearbeitung, Gewindefurcher
- 2: Werkzeugschaft
- 3: Vierkant
- 5: Formungsbereich
- 6: Formgebungskurve
- 7, 7a, 7b, 7c: Drückstollen
- 8: Spitze des Drückstollens
- 9, 9a, 9b, 9c: Drücksteg
- 10: Bördelsteg
- A: Werkzeugachse
- V: Vorschubrichtung
- H_{B}: Höhe Bördelsteg
- H_{D}: Höhe Drückstollen
- H_{K}: halber Kerndurchmesser des Werkzeugs

## Patentansprüche

1. Werkzeug (1) zur spanlosen Erzeugung oder Nachbearbeitung eines Gewindes in oder an einem Werkstück, insbesondere Gewindefurcher oder Gewindeformer, umfassend mindestens einen um eine Werkzeugachse (A) drehbaren oder drehenden Formungsbereich (5) zur spanlosen Erzeugung oder Nachbearbeitung des Gewindes, insbesondere eines Innengewindes,
wobei der Formungsbereich (5) mehrere radial von der Werkzeugachse (A) weg nach außen ragende oder vorstehende Drückstollen (7, 7a, 7b, 7c) aufweist zum Erzeugen oder Nachbearbeiten des Gewindes durch Eindrücken der Drückstollen (7, 7a, 7b, 7c) in die Werkstückoberfläche,
wobei die Drückstollen (7, 7a, 7b, 7c) entlang einer die Werkzeugachse (A) im Wesentlichen spiralförmig umlaufenden Formgebungskurve (6) aufeinanderfolgend angeordnet sind, und
wobei die Steigung der Formgebungskurve (6) im Wesentlichen der Steigung des zu erzeugenden oder nachzuarbeitenden Gewindes entspricht,
wobei die Drückstollen zumindest einen Drücksteg (9) bilden,
**dadurch gekennzeichnet,**
**dass** benachbart zu dem zumindest einen Drücksteg (9) ein Bördelsteg (10) mit einer geringeren Höhe H_{B} als der Höhe des Drückstegs H_{D} ausgebildet ist.

2. Werkzeug (1) nach Anspruch 1, **dadurch gekennzeichnet, dass** die Drückstollen (7) in zumindest zwei Drückstegen (9) angeordnet sind und das Werkzeug zumindest zwei Bördelstege (10) aufweist, welche jeweils zwischen zwei Drückstegen (9) angeordnet sind.

3. Werkzeug (1) nach Anspruch 1 oder 2, **dadurch gekennzeichnet, dass** der Bördelsteg (10) eine Höhe H_{B} aufweist, die zwischen einem halben Kerndurchmesser des Werkzeugs H_{K} und der Höhe des Drückstegs H_{D} liegt.

4. Werkzeug (1) nach einem der vorhergehenden Ansprüche, **dadurch gekennzeichnet, dass** sich der zumindest eine Drücksteg (9) und der zumindest eine Bördelsteg (10) parallel zur Werkzeugachse (A) erstrecken.

5. Werkzeug (1) nach einem der vorhergehenden Ansprüche, **dadurch gekennzeichnet, dass** die zumindest zwei Bördelstege (10) symmetrisch in Bezug auf die Werkzeugachse (A) angeordnet sind.

6. Werkzeug (1) nach einem der vorhergehenden Ansprüche, **dadurch gekennzeichnet, dass** mehrere Drückstege (9) zwischen zwei Bördelstegen (10) angeordnet sind.

7. Werkzeug (1) nach einem der vorhergehenden Ansprüche, **dadurch gekennzeichnet, dass** ein Teilungswinkel zwischen einem Drücksteg (9) und/oder Bördelsteg (10) und dem in Umfangsrichtung nachfolgenden Drücksteg (9) und/oder Bördelsteg (10) im Wesentlichen gleich ist.

8. Werkzeug (1) nach einem der vorhergehenden Ansprüche, **dadurch gekennzeichnet, dass** ein oder mehrere Drückstollen in einem oder mehreren Drückstegen verkleinert oder entfernt sind.

9. Werkzeug (1) nach einem der vorhergehenden Ansprüche, **dadurch gekennzeichnet, dass** der Bördelsteg (10) sich entlang der kompletten Länge des zumindest eines Drückstegs (9) erstreckt und/oder dass der Bördelsteg (10) aus zwei oder mehreren Teilbördelstegen gebildet ist, wobei jeder Teilbördelsteg auf der Formgebungskurve (6) angeordnet ist und vorzugsweise eine größere Länge in Richtung der Werkzeugachse (A) aufweist als der auf der Formgebungskurve (6) vorhergehende Drückstollen (7).

10. Verfahren zum Herstellen eines Innengewindes mit den folgenden sich iterativ wiederholenden Schritten:
- Eindrücken eines Gewindes mittels eines oder mehrerer Drückstollen (9) mit einem rotierenden Werkzeug, wobei das rotierende Werkzeug insbesondere ein Werkzeug (1) nach einem der Anspruche 1 bis 9 ist, und
- Nachfolgendes Umformen des Gewindezwischenraumes mit einem Bördelsteg (10).
